# EUROPEAN PATENT APPLICATION

(11) **EP 4 838 909 A1**
(43) Date of publication of application: **11.11.2026**
(21) Application number: 26176323.9
(22) Date of filing: 04.05.2026
(51) Int. Cl.: H04W 4/02, H04W 4/80

(54) **WIRELESS COMMUNICATION FOR LOCAL POSITIONING SYSTEMS**

(30) Priority: 06.05.2025 IT 202500010068
(71) Applicant: Blueup S.r.l., 53034 Colle Di Val D'Elsa Siena (IT)
(72) Inventor: CUCINI, Alessio, 53034 COLLE DI VAL D'ELSA, SIENA (IT); FORCONI, Samuele, 53034 COLLE DI VAL D'ELSA, SIENA (IT); MARIOTTINI, Francesco, 53034 COLLE DI VAL D'ELSA, SIENA (IT)
(74) Representative: Cevini, Gaia

(57) **Abstract**

A wireless communication system for a local positioning system is provided, comprising a first device and a second device configured to communicate according to the Bluetooth Low Energy (BLE) protocol. The first device is configured to transmit a first packet formatted as an undirected, non-connectable, and non-scannable advertising packet according to the BLE protocol, which includes an acknowledgment request identifier settable to a value indicating that the first device requests an acknowledgment of the packet's receipt by the second device. The second device is configured to receive the first packet and retrieve a value of the acknowledgment request identifier; based on that value, determine that the first device requires an acknowledgment of receipt of the first packet, and transmit to the first device a second packet formatted as a directed, non-connectable, and non-scannable advertising packet according to the BLE protocol.

## Description

### FIELD OF THE INVENTION

The present invention relates to the field of wireless communications in local positioning systems (LPS, Local Positioning Systems). In particular, the present invention relates to a wireless communication system for local positioning systems, in particular for local positioning systems in which communication between devices is based on Bluetooth Low Energy technology.

### BACKGROUND ART

Local positioning systems operating on a local scale (i.e. within a confined environment, which may be indoor and/or outdoor) are also referred to as LPS (Local Positioning Systems), as opposed to GPS (Global Positioning Systems), which are positioning systems operating on a geographical scale (typically based on satellite constellations).

LPS systems have an architecture comprising three main components:
- mobile devices, also referred to as tags; the tags are typically battery-powered devices, having low power consumption and small dimensions, which are attached to objects to be located or worn by persons to be located. The tags typically operate as radio beacons and periodically transmit a data packet (also simply referred to as a "packet") comprising a unique identifier of the device, as well as possible additional information (for example, battery status, device status, sensor data, etc.);
- fixed devices, typically powered by the electrical mains and typically connected within a local network, of a wired type (for example, Ethernet) or wireless type (for example, WiFi, mesh network, etc.). These devices operate as gateways configured to receive the data packets transmitted by the tags, extract information useful for calculating the position of the tags, and forward said packets and said information to software configured to perform the calculation. The information used for position calculation includes, for example, received signal strength (RSSI, Received Signal Strength Indicator), angle of arrival (AoA, Angle of Arrival), or time of flight (ToF, Time-of-Flight); and
- position calculation software (or localization software), which may be installed locally (on a computer within the same local network) or in the cloud. The software receives tag-related information from the fixed devices and, using position data of the fixed devices, calculates the position of the tags, generally in a local reference system, using suitable mathematical algorithms (for example, trilateration algorithms).

Among the data transmission technologies typically used for local positioning systems, one of the most widely adopted is Bluetooth technology, in particular in the Bluetooth Low Energy (BLE) version defined in the corresponding protocol, due to its low energy consumption, its widespread availability (such technology being supported by many mobile devices, such as smartphones, tablets, and others), and the low cost of hardware components. BLE tags operate as radio beacons: they periodically transmit an advertising packet in broadcast, i.e. a packet of the "undirected" type, using a format defined by the BLE protocol; such packet may be received by any BLE device operating in scanning mode.

EP2953387A1 describes a method, a computer program and a system for establishing wireless communication between at least two Bluetooth Low Energy (BLE) devices, the method comprising the steps of: switching a first BLE device into a scanning mode; switching a second BLE device into an advertising mode and broadcasting a first advertising packet from the second BLE device; switching the second BLE device into scanning mode; receiving the first advertising packet by the first BLE device; and switching the first BLE device into advertising mode and broadcasting a second advertising packet from the first BLE device.

WO2022042637A1 describes a Bluetooth-based data transmission method and a related apparatus. The method comprises: a broadcast transmission device sending a broadcast transmission packet to a scanning device; the broadcast transmission device receiving a scan request packet sent by the scanning device, the scan request packet being sent to the broadcast transmission device by the scanning device in response to the broadcast transmission packet and carrying data information; and the transmission device processing the data information.

### SUMMARY OF THE INVENTION

The inventors have observed that, in general, the BLE advertising mechanism mentioned above provides a unidirectional communication, i.e. an uplink communication from the tags to the fixed devices (which will be referred to as "gateway devices" or "gateways"). Due to the unidirectional transmission by the tags, current localization systems based on the BLE protocol have several limitations, among which the two main ones are:
- the impossibility of performing transmissions with acknowledgement request (ACK): the tag transmits in broadcast but does not know whether the packet has been received by at least one gateway. The acknowledgement request is useful for transmitting high-priority information or for optimizing transmission by the tag and thus reducing power consumption;
- the impossibility of receiving commands: it is not possible to send commands from the gateways to the tags (to a single tag, to a group of tags or to all tags) to trigger specific actions following external inputs or specific events (for example, causing an LED to blink if the tag is detected within a certain area or in proximity to a specific gateway). Commands may also be used to update operational configurations of the tags, which define their operating parameters.

The BLE protocol supports bidirectional point-to-point communication only between two devices, a peripheral device and a central device, which have established a connection. This is the use case, for example, of Bluetooth accessories connected to smartphones (earphones, wristbands, etc.). However, for local positioning systems, it is necessary for the tag to transmit in broadcast in order to be received by multiple gateways, and not by a single gateway, so as to allow accurate position estimation. Moreover, the connection mechanism between two devices requires implementation of the entire BLE protocol stack and may require relatively long connection establishment times (from fractions of a second to several seconds).

The BLE protocol provides a mechanism for bidirectional data exchange with lower energy consumption, although limited in functionality, through Scan Request packets (i.e. packets with a PDU - Protocol Data Unit - of type SCAN_REQ, also referred to simply as SCAN_REQ packets) and Scan Response packets (SCAN_RSP). This mechanism is used to allow a central device to request additional information from a peripheral device not included in the advertising packet. Indeed, the advertising packet has a limited length (31 bytes available for data), which may not be sufficient to transmit all device information. The mechanism comprises the following operations:
- the peripheral device transmits in broadcast an "undirected" advertising packet of type ADV_SCAN_IND (indicating that the transmitter accepts scan requests but not connection requests) or ADV_IND (indicating that the transmitter accepts both scan and connection requests);
- the central device responds with a "directed" SCAN_REQ packet containing only the address of the central device and the address of the peripheral device;
- the peripheral device in turn responds with a SCAN_RSP packet containing additional information (up to an additional 31 bytes of data).

In principle, this mechanism could be adapted to provide an acknowledgement to the peripheral device through the transmission of a SCAN_REQ packet by the central device, i.e. in an LPS system, from a gateway to a tag. However, this mechanism is subject to operational drawbacks, since any Bluetooth device operating in active scanning mode may send a SCAN_REQ packet upon receiving an ADV_SCAN_IND (or ADV_IND) advertising packet. Therefore, the SCAN_REQ packet could also be sent by a device not belonging to the gateway network (for example, a smartphone with Bluetooth enabled) and would be incorrectly interpreted as an acknowledgement by the peripheral device. Furthermore, the SCAN_REQ packet does not include a data payload and therefore cannot be used to transmit data in downlink from the central device (i.e. the gateway) to the peripheral device (i.e. the tag).

In conclusion, the mechanism based on ADV_SCAN_IND (or ADV_IND) and SCAN_REQ packets is not suitable for implementing bidirectional wireless communication in an LPS system.

Version 5.4 of the BLE protocol, published in 2023, introduced a communication mechanism known as PAWR (Periodic Advertising With Response). This mechanism provides that a device, referred to as a "Broadcaster", periodically transmits an advertising packet in broadcast. Receivers, also referred to as "Observers", synchronized with the Broadcaster, may each transmit a response within a respective assigned time slot.

This mechanism is also not suitable for application in an LPS system. In principle, if implemented in an LPS system, the mechanism would allow each tag device to send a response to only one gateway device, thereby making it impossible to implement localization algorithms. Furthermore, the PAWR mechanism is typically applied in a static configuration, such as electronic shelf label (ESL) systems; in an LPS system, if the tag devices move, they would need to synchronize each time with a different gateway device depending on their position, thus significantly increasing power consumption. Finally, the number of transmission time slots available for the gateway device is limited, thereby limiting the number of tag devices that can be served within the coverage area of the gateway device.

The inventors have further observed that the method described in EP2953387A1, which does not relate to a local positioning system, provides for the transmission of advertising packets in broadcast by both devices involved in the bidirectional communication: all packets may therefore be received by any Bluetooth device operating in scanning mode. Furthermore, each device always switches role (from advertiser to scanner or vice versa) after transmission/reception of the first advertising packet.

The method described in WO2022042637A1 also does not specifically relate to a local positioning system. Furthermore, the inventors have observed that said method involves adding data to the SCAN_REQ packet according to an implementation that is necessarily non-compliant with the Bluetooth protocol packet format.

In light of the above, the Applicant has set the objective of providing a wireless communication system for a local positioning system (LPS). In particular, the Applicant has set the objective of providing a wireless communication system based on Bluetooth Low Energy technology, capable of managing bidirectional data communication without connection, while overcoming the drawbacks described above.

In the following description and in the claims, the expression "downlink communication", when referring to communication between a tag device and a gateway device, indicates the transmission of packets from the gateway device to the tag device, whereas the expression "uplink communication" indicates the transmission of packets from the tag device to the gateway device.

Furthermore, the expression "undirected" refers to a packet transmitted in broadcast mode and receivable by any device in scanning mode, whereas the expression "directed" refers to a packet transmitted in unicast mode to be received by a single device identified by its address.

Furthermore, as already indicated above, in the following description and in the claims, BLE advertising packets are identified by their PDU Name according to the BLE protocol: accordingly, a packet comprising a PDU of type ADV_NONCONN_IND is referred to simply as an "ADV_NONCONN_IND packet" or "packet of type ADV_NONCONN_IND", a packet comprising a PDU of type ADV_EXT_IND is referred to as an "ADV_EXT_IND packet" or "packet of type ADV_EXT_IND", and so on.

According to a first aspect, the present invention provides a wireless communication system for a local positioning system, the wireless communication system comprising a first device and a second device configured to communicate according to the Bluetooth Low Energy protocol, wherein the first device is configured to transmit a first packet formatted as an undirected, non-connectable and non-scannable advertising packet according to the Bluetooth Low Energy protocol, the first packet comprising an acknowledgement request identifier settable to a value indicating that the first device requires an acknowledgement of receipt of the first packet at the second device,
and wherein the second device is configured to:
- receive the first packet and retrieve the value of the acknowledgement request identifier contained in the first packet;
- based on the value of the acknowledgement request identifier contained in the first packet, determine that the first device requires acknowledgement of receipt of the first packet, and transmit to the first device a second packet formatted as a directed, non-connectable and non-scannable advertising packet according to the Bluetooth Low Energy protocol.

Preferably, the second device is further configured to store a set of operational data for the first device, the operational data comprising an operational configuration and/or a command for the first device; the first device is further configured to insert identifying information of the first device into the first packet, the identifying information being associated with current operational data of the first device; and the second device is further configured to use the identifying information of the first device to verify whether the second device comprises updated operational data with respect to the current operational data of the first device.

The expression "current operational data of the first device" refers to operational data that have been received at the first device from a gateway device (in particular, the most recently received operational data in chronological order at the first device) and processed at the first device; in particular, such data may comprise an operational configuration received at the first device and currently present at the first device (i.e. a current operational configuration of the first device), and a command received at the first device, in particular the most recently received command, and processed at the first device, the execution of which may or may not have been completed by the first device.

The second device is further preferably configured to, in the event that updated operational data for the first device are present, send the updated operational data to the first device.

According to embodiments of the present invention, the identifying information of the first device comprises an operational configuration identifier and a command identifier, the operational configuration identifier being indicative of a current operational configuration of the first device and the command identifier being indicative of a command received at the first device whose execution may or may not have been completed by the first device.

The second device may send the first packet to a central processing device configured to estimate a position of said first device.

According to some embodiments of the present invention, the acknowledgement request identifier is settable to a first value indicating that the first device does not require acknowledgement of receipt of the first packet, or a second value indicating that the first device requires acknowledgement of receipt of the first packet only in the event that updated operational data for the first device are present at the second device, or a third value indicating that the first device requires acknowledgement of receipt of the first packet even in the absence of updated operational data at the second device.

Preferably, the first device comprises a radio transceiver configured to:
- operate in a transmission state to transmit the first packet;
- switch from the transmission state to a reception state in the event that the first device requires acknowledgement of receipt of the first packet by the second device;
and the first device is configured to:
- switch off the radio transceiver upon completion of transmission of the first packet in the event that the first device does not require acknowledgement of receipt of the first packet by the second device.

Furthermore, the radio transceiver of the first device is configured to remain in the reception state until completion of reception of the second packet or for a predefined maximum time, and the first device is configured to switch off the radio transceiver upon completion of reception of the second packet or upon expiry of the predefined maximum time.

According to some embodiments, the second device is configured to disable transmission of the second packet in the event that a received signal strength (Received Signal Strength Indicator, RSSI) associated with the first packet originating from the first device is lower than a predefined threshold.

According to some embodiments of the present invention, the first packet is a packet of type ADV_NONCONN_IND according to the Bluetooth Low Energy protocol and the second packet is a packet of type ADV_EXT_IND according to the Bluetooth Low Energy protocol.

According to these embodiments, furthermore, the second packet is a packet of type ADV_EXT_IND with an auxiliary packet according to the Bluetooth Low Energy protocol, and the updated operational data are sent to the first device in a packet of type AUX_ADV_IND according to the Bluetooth Low Energy protocol.

According to these embodiments, finally, the first device is configured to transmit the first packet on any one of the primary advertising channels according to the Bluetooth Low Energy protocol and the second device is configured to receive the first packet on the same primary advertising channel. Alternatively, the first device is configured to transmit the first packet on all the primary advertising channels according to the Bluetooth Low Energy protocol and the second device is configured to cyclically switch its radio transceiver over all the primary advertising channels.

According to a second aspect, the present invention provides a local positioning system comprising the wireless communication system described above.

In the wireless communication system according to embodiments of the present invention, the first device is a battery-powered device and the second device is a mains-powered device.

### BRIEF DESCRIPTION OF THE DRAWINGS

The present invention will become clearer from the following detailed description, provided purely by way of non-limiting example, to be read with reference to the accompanying drawings, in which:
- Figure 1 schematically shows an example of a local positioning system;
- Figure 2 is a block diagram of a tag device of the local positioning system of Figure 1;
- Figure 3 is a block diagram of a gateway device of the local positioning system of Figure 1;
- Figure 4 schematically illustrates bidirectional communication in the system of Figure 1 according to embodiments of the present invention; and
- Figures 5a, 5b and 5c schematically show packet exchanges according to embodiments of the present invention.

### DETAILED DESCRIPTION OF PREFERRED EMBODIMENTS OF THE INVENTION

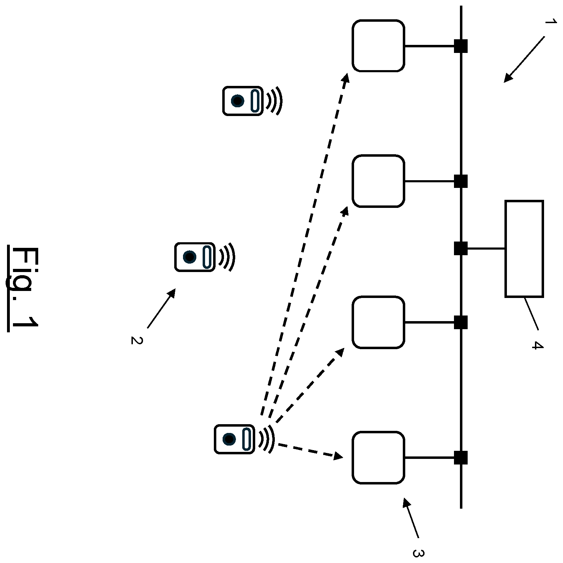

Figure 1 schematically shows an example of a wireless communication system 1 (hereinafter, for simplicity, "system") for a local positioning system (LPS). The system 1 is located in a bounded environment, which may be an indoor and/or outdoor environment (for example, a factory, a warehouse, a hospital, a construction site, etc.).

The system 1 comprises one or more first devices 2 and one or more second devices 3. The first devices 2 are preferably mobile battery-powered devices (also referred to as "tag devices" or simply "tags"), whereas the second devices 3 are preferably devices arranged in fixed positions within the considered environment, powered by the electrical mains and connected within a local network (also referred to as "gateway devices" or simply "gateways").

The gateway devices 3 are connected via a communication network to a central processing device 4, for example a PC, on which a software module is installed including the functionalities and algorithms necessary for estimating the position of the tag devices 2 within the considered environment (localization software). The network connecting the gateway devices 3 to the central processing device 4 may be wired or wireless. The localization software may be installed on a local server or in the cloud, on a single device or on multiple devices according to a distributed architecture. For simplicity, in the following description reference will be made to the configuration schematically illustrated in Figure 1, comprising a central processing device 4 on which the localization software is installed. Furthermore, by way of non-limiting example, reference will be made to localization software configured to estimate the position of the tag devices based on received signal strength (RSSI, Received Signal Strength Indicator).

The system according to the present invention preferably adopts the Bluetooth protocol in the Low Energy version (BLE) as defined in the corresponding standard. In particular, the system according to the present invention uses the physical layer of such protocol and the format of a subset of advertising packets of the link layer defined in the Bluetooth Low Energy standard version 5.0 (and subsequent versions). In the following description, the protocol defined in the Bluetooth Low Energy standard version 5.0 (and subsequent versions) will be referred to simply as the "BLE protocol".

As is known, the BLE stack architecture is the structured software framework enabling communication between BLE devices. It defines the layers and protocols required to establish, maintain and terminate connections between devices, as well as to facilitate data exchange between devices. The BLE stack architecture and the specifications of the various layers are known and will therefore not be described in detail herein after. Some features of such architecture useful for understanding the following description will be recalled below.

The physical layer is positioned at the lowest level of the BLE stack and is responsible for transmission and reception of the signal. The physical layer comprises 40 channels, spaced by 2 MHz from each other: three primary advertising channels (referred to as "Primary Advertising Channels", namely CH37 = 2402 MHz, CH38 = 2426 MHz and CH39 = 2480 MHz) are used to transmit data packets to advertise the presence of an advertiser device and its available services or information (these data packets are referred to as "advertising packets"), and 37 channels (referred to as "General Purpose Channels", from CH0 to CH36), which are used for data exchange between a central device and a peripheral device connected to each other and as auxiliary channels for secondary advertising (therefore also referred to as "Secondary Advertising Channels"), as will be described below.

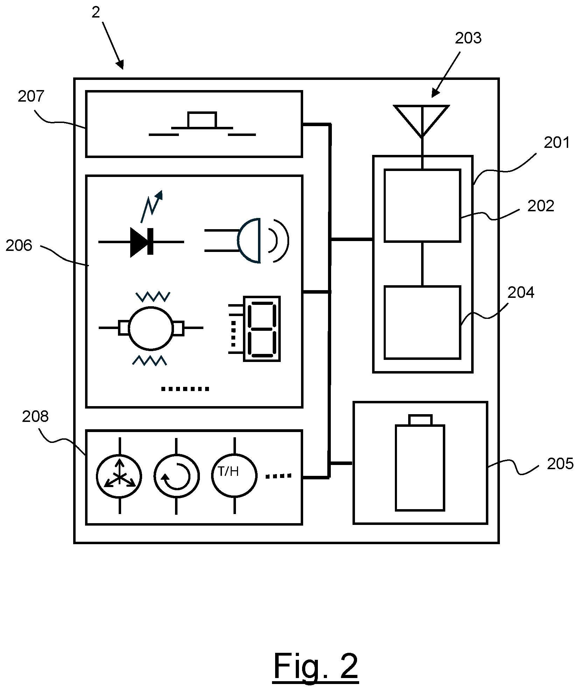

Figure 2 shows a block diagram of a tag device 2 of the system according to embodiments of the present invention. In particular, each tag device 2 preferably comprises the following components:
- a radio module 201 comprising:
   - a radio transceiver 202, preferably a narrowband radio transceiver, configured to operate alternately as a receiver and as a transmitter, i.e. respectively in a reception operating state (also simply referred to as reception state) and in a transmission operating state (also simply referred to as transmission state);
   - an antenna 203 connected to the radio transceiver 202; and
   - a microcontroller 204 with a software module installed therein and configured to acquire and process information from the transceiver 202 and to control the electronic components of the tag;
- a power supply system 205, preferably comprising a battery, primary or rechargeable, optionally in combination with an energy harvesting system (for example, a photovoltaic module); and
- a non-volatile memory (not shown in the Figure).

The radio transceiver is preferably a BLE transceiver configured to transmit and receive in the frequency band between 2.402 GHz and 2.480 GHz. The radio transceiver, the microcontroller and the non-volatile memory of the tag device may be integrated into a single electronic component, for example in a System-on-Chip integrated circuit. Examples of System-on-Chip integrated circuits that may be used in the tag devices 2 include devices of the nRF52 family manufactured by Nordic Semiconductors ASA, Norway.

The tag device 2 may further comprise additional components, such as for example:
- one or more human-machine interface devices 206, comprising for example one or more LEDs, a buzzer, a vibration motor, one or more displays (for example LCD, e-ink label, etc.);
- one or more buttons 207, with programmable functionality, also of the touch-screen type;
- first sensors for detecting the motion or stationary state of the device (for example inertial sensors such as an accelerometer or a gyroscope); and
- second sensors configured to measure environmental parameters such as temperature, humidity, etc.

In Figure 2, the first and second sensors are schematically represented by block 208.

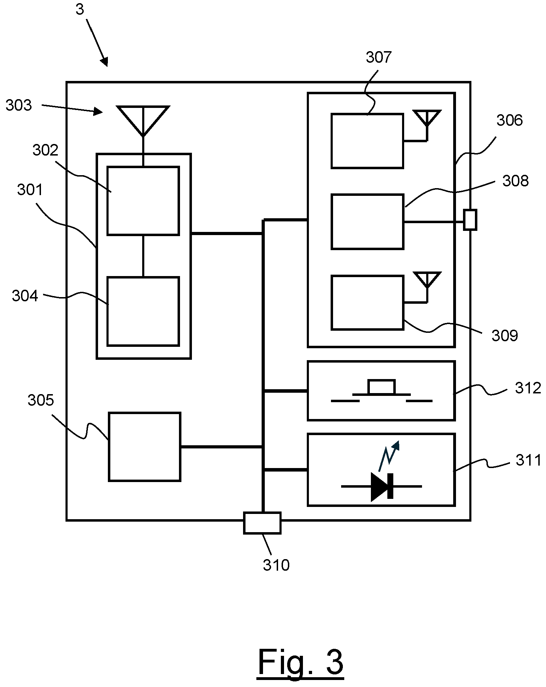

Figure 3 shows a block diagram of a gateway device 3 of the system according to embodiments of the present invention. In particular, each gateway device 3 preferably comprises the following components:
- a radio module 301 comprising:
   - a radio transceiver 302, preferably a narrowband radio transceiver, configured to operate alternately as a receiver and as a transmitter (i.e. respectively in a reception operating state and in a transmission operating state);
   - an antenna 303 connected to the radio transceiver 302; and
   - a microcontroller 304 with a software module installed therein and configured to acquire and process information from the transceiver and to control operation of the transceiver;
- a processing device 305 (a processor) comprising a software module configured to manage the electronic components of the gateway device and to manage communication with the central processing device;
- a data communication interface 306 (which may comprise, for example, a WiFi radio interface 307 and/or an Ethernet controller 308 and/or a cellular modem 309 and/or another type of data communication interface capable of providing bandwidth suitable for system requirements); and
- a power supply system, preferably comprising a power port 310 for connecting the gateway to the electrical mains.

The radio transceiver of the gateway device 3 is preferably a BLE transceiver. Such transceiver may, for example, be configured to transmit and receive in the frequency band between 2.402 GHz and 2.480 GHz. The radio transceiver and the microcontroller of the gateway device may be integrated into a single electronic component, for example in a System-on-Chip integrated circuit. Examples of System-on-Chip integrated circuits that may be used in the gateway devices 3 include devices of the nRF52 family manufactured by Nordic Semiconductors ASA, Norway.

The gateway device 3 may further comprise additional components, such as for example:
- human-machine interface devices 311, comprising for example one or more LEDs or other signalling devices; and
- one or more buttons 312, with programmable functionality, also of the touch-screen type.

According to the present invention, each tag device 2 is associated with a respective device identifier DEV_ID. The device identifier may be the address of the tag device 2, in particular the Bluetooth address of the radio transceiver of the tag device 2.

Furthermore, according to the present invention, the tag devices 2 may be divided into a number of classes, each class being identified by a class identifier CLS_ID. The class identifier CLS_ID is a number identifying the class to which a tag device 2 belongs. It may be an integer equal to or greater than zero. Each class identifies a set of tag devices 2 sharing certain functional characteristics, in particular, preferably, the same operational configuration. The operational configuration of a tag device defines certain operating characteristics of the device, such as, for example, transmission interval, transmission power, threshold values for detecting conditions associated with sensor measurements, etc. For example, in an LPS in which tags are used to track both persons and objects, the tags worn by persons will have a given class identifier CLS_ID, whereas the tags attached to objects will have a different class identifier; in such a case, the configuration parameters defining the operation of the tags may differ (for example, different motion detection thresholds).

According to the present invention, each gateway device 3 comprises, in its internal memory, within the microcontroller 304, a set of operational data for the tag devices 2. The operational data preferably comprise configuration data and command data. The configuration data comprise data defining operational configurations for the tag devices 2. The command data comprise data defining commands for the tag devices 2. For example, the commands may comprise: commands for temporarily activating signalling components of the tag (for example LED blinking, buzzer sound, etc.), commands for displaying an alphanumeric string on a display of the tag, commands for performing specific temporary functions, etc.

In particular, according to embodiments of the present invention, each gateway device 3 comprises a first list comprising the configuration data. Said list comprises, for each class identifier CLS_ID, data defining a respective operational configuration for the tag devices 2 of the considered class. Each operational configuration is associated, in addition to a respective class identifier CLS_ID, with a respective configuration identifier CFG_ID, which is, for example, an integer equal to or greater than one. The configuration data of each operational configuration may be generated by the software module of the central processing device 4 of the local positioning system 1.

When a new operational configuration for the tag devices 2 is generated, a new configuration identifier CFG_ID is associated therewith, having a value obtained by incrementing by one the current value of the configuration identifier CFG_ID (i.e. the value of the configuration identifier CFG_ID associated with the last operational configuration generated in the system 1).

According to these embodiments of the present invention, each gateway device 3 further comprises a second list comprising the command data. Each command is associated with a respective command identifier CMD_ID, which is, for example, an integer equal to or greater than one. The command data relating to commands for the tag devices 2 may be generated by the software module of the central processing device 4 of the local positioning system 1. Each command in the second list may be associated with a respective tag device 2 and therefore with a respective device identifier DEV_ID, or with a respective class of tag devices identified by a respective class identifier CLS_ID.

According to other embodiments, the second list of command data may comprise two separate lists, respectively comprising commands associated with individual tag devices 2 and commands associated with classes of tag devices.

When a new command for the tag devices 2 is generated, a new command identifier CMD_ID is associated therewith, having a value obtained by incrementing by one the current value of the command identifier CMD_ID (i.e. the value of the command identifier CMD_ID associated with the last command generated in the system 1).

The data contained in the first list and in the second list are preferably transmitted to the gateway devices 3 by the software module of the central processing device 4, which maintains a copy of such data in memory, together with updated values of the configuration identifier CFG_ID and the command identifier CMD_ID. The operational data may be generated at the central processing device based on user input or on input from external software. For example, a system operator, via the software user interface, may enter new parameters for updating the configuration of tags belonging to a given class (for example, to modify the transmission interval of the tags). Alternatively, external software, connected to the localization software via application programming interfaces (API), following a specific event (for example, pressing a button on a tag associated with a request for assistance from a user), may generate a command which is sent to the localization software and from there to the gateways (for example, the command may activate a visual or acoustic signal on the tag to indicate that the assistance request has been taken into account).

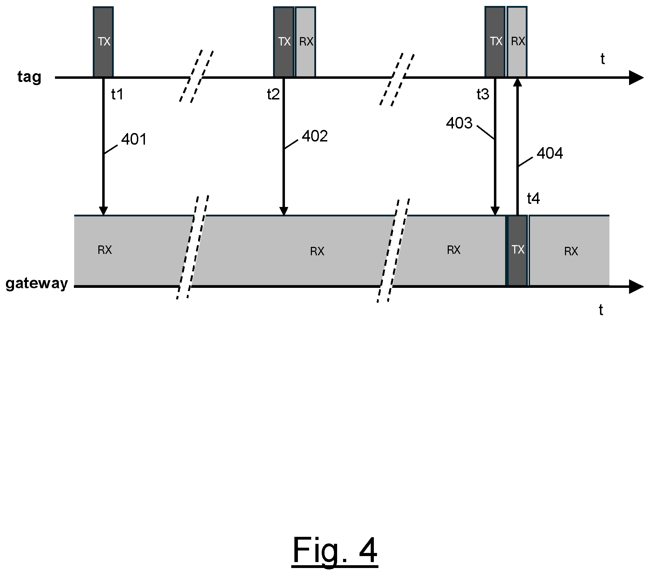

Figure 4 schematically illustrates bidirectional communication between a tag device 2 and a gateway device 3 of the system 1 according to embodiments of the present invention. Said bidirectional communication may preferably be implemented between any tag device 2 of the system 1 and any gateway device 3 of the same system.

According to these embodiments of the present invention, the tag device 2, in particular its radio transceiver, periodically switches to the transmission state and, in particular, periodically transmits, in broadcast mode, an advertising packet which, for simplicity, will be referred to as an "uplink packet". The transmission interval of the uplink packets will be indicated by the letter "T". The gateway device 3, in particular its radio transceiver, preferably operates in a reception state. More particularly, the radio transceiver of the tag device 2 is preferably always switched off except during periodic time intervals in which it transmits the uplink packet and except during further intervals, each following an uplink packet transmission interval, in which it switches to the reception state to receive a possible packet (which will be referred to as "primary downlink packet") from a gateway device 3 as an acknowledgement of receipt of the uplink packet and, optionally, one or more packets subsequent thereto (which will also be referred to as "secondary downlink packets"), as will be described below. The radio transceiver of the gateway device 3 is always switched on in the reception state, except during some time intervals in which it switches to the transmission state to transmit the primary downlink packet to the tag device 2 (and optionally one or more subsequent secondary downlink packets), following reception by the gateway device 3 of an uplink packet sent by the tag device 2.

The uplink packet comprises:
- identifying information of the tag device 2; and
- an acknowledgement request identifier.

In particular, the uplink packet is preferably a packet configured to transmit broadcast information without allowing either connections or scan requests. In other words, the uplink packet is preferably an undirected, non-connectable and non-scannable advertising packet. According to the BLE protocol, such packet may be a packet of type ADV_NONCONN_IND (for example, the format of such packet is described in the Bluetooth Core Specification 5.4, Volume 6, Part B, Section 2.3.1.3).

The uplink packet comprises a payload comprising a first field "Advertiser Address" - AdvA (6 bytes) and a second field "Advertising Data" - AdvD (0-31 bytes). The AdvA field contains first identifying information of the tag device 2, namely the address of the tag device 2, which, according to these embodiments, corresponds to the device identifier DEV_ID.

Preferably, according to embodiments of the present invention, the AdvD field of the uplink packet comprises a number of further identifying information items associated with the tag device 2. Said number of identifying information items comprises:
- a class identifier CLS_ID;
- a configuration identifier CFG_ID;
- a command identifier CMD_ID;
- an acknowledgement request identifier ACK_REQ.

As already mentioned above, the class identifier CLS_ID is the number identifying the class to which the tag device 2 belongs. The configuration identifier CFG_ID is the identification number associated with the last operational configuration received by the tag device 2, as will be described in greater detail below. The command identifier CMD_ID is the identification number associated with the last command received by the tag device 2, as will be described below.

According to some embodiments, together with the configuration identifier CFG_ID associated with the last operational configuration received, the tag device 2 may also insert into the uplink packet a field providing a return code associated with the considered operational configuration, which may indicate, by way of example, whether the operational configuration has been applied, whether an error in the configuration has been detected, etc.

Similarly, together with the command identifier CMD_ID associated with the last command received, the tag device 2 may also insert into the uplink packet a field providing a return code associated with the command, which may indicate, by way of example, whether the command is being executed, whether the command has been completed, whether an execution error has been detected, etc.

The acknowledgement request identifier ACK_REQ contains the information required to manage downlink communication. In particular, the acknowledgement request identifier ACK_REQ is settable to a value indicating that the tag device 2 requires an acknowledgement of receipt of the uplink packet by the gateway device 3, thereby triggering possible transmission of the primary downlink packet from the gateway device 3 to the tag device 2.

According to some embodiments of the present invention, the acknowledgement request identifier ACK_REQ preferably includes two bits, a first high-priority request bit HP_ACK_REQ (High-Priority ACK Request) and a second low-priority request bit LP_ACK_REQ (Low-Priority ACK Request); the acknowledgement request identifier ACK_REQ may therefore assume a numerical value between 0 and 3. According to embodiments of the present invention, each value from 0 to 2 (value ACK_REQ = 3 being, for instance, unused or reserved) corresponds to a respective operating condition, as specified below:
- ACK_REQ = 0 (HP_ACK_REQ = 0, LP_ACK_REQ = 0): the tag device 2 does not require an acknowledgement (ACK) of receipt of the uplink packet. In this case, the radio transceiver of the tag device 2 is switched off upon completion of transmission of the uplink packet;
- ACK_REQ = 1 (HP_ACK_REQ = 0, LP_ACK_REQ = 1): the tag device 2 requires from the gateway device 3, in response to receipt of the uplink packet, a low-priority acknowledgement, i.e. an acknowledgement to be sent only if updated operational data to be sent in downlink to the tag device 2 are present in the memory of the gateway device 3. The expression "updated operational data" refers to operational data different from the current operational data of the tag device 2. The current operational data comprise an operational configuration, in particular the most recent one in chronological order, received by the tag device 2 from a gateway device and currently present on (in particular, for instance, stored at) said device, and/or a command, in particular the most recent one in chronological order, received by the tag device 2 from a gateway device, the execution of which may or may not have been completed by the first device. The updated operational data therefore comprise a new operational configuration and/or a new command for the tag device 2. In the event that the tag device 2 requests from the gateway device 3 a low-priority acknowledgement, upon completion of transmission of the uplink packet, the radio transceiver of the tag device 2 switches its state from the transmission state to the reception state, and remains in the reception state until complete reception of the primary downlink packet; alternatively, the radio transceiver of the tag device 2 remains in the reception state for a predefined maximum time; upon reception of the primary downlink packet, or upon expiry of the predefined maximum time, the radio transceiver of the tag device 2 is switched off;
- ACK_REQ = 2 (HP_ACK_REQ = 1, LP_ACK_REQ = 0): the tag device 2 requires from the gateway device 3, in response to receipt of the uplink packet, a high-priority acknowledgement, i.e. an acknowledgement to be sent regardless of whether or not updated operational data to be sent in downlink to the tag device 2 are present in the memory of the gateway device 3. In this case, upon completion of transmission of the uplink packet, the radio transceiver of the tag device 2 switches its state from the transmission state to the reception state, and remains in said state until complete reception of the primary downlink packet; upon reception of the primary downlink packet, the radio transceiver of the tag device 2 is switched off.

The use of two bits to manage the acknowledgement request makes it possible to optimize use of bandwidth on the primary advertising channels. In particular, transmission of the primary downlink packet is performed if and only if the gateway device 3 has updated operational data in memory to be sent to the tag device 2, or if the tag device 2 requests an acknowledgement even in the absence of such updated operational data.

According to the embodiments of the present invention described in detail herein, the updated operational data are sent by the gateway device 3 to the tag device 2 in one or more secondary downlink packets transmitted after the primary downlink packet.

Each downlink packet is preferably a packet configured to transmit unicast information without allowing either connections or scan requests. In other words, it is preferably a directed, non-connectable and non-scannable advertising packet, which may be received only by the tag device to which it is addressed.

According to embodiments of the present invention, when the gateway device 3 does not have updated operational data to be sent to the tag device 2, the primary downlink packet is an advertising packet using a directed, non-connectable and non-scannable Common Extended Advertising Payload Format, without an auxiliary packet. According to the BLE protocol, this packet is an ADV_EXT_IND packet without an auxiliary packet (as described, for example, in the Bluetooth Core Specification 5.4, Volume 6, Part B, Sections 2.3.1.5 and 2.3.4). Conversely, when the gateway device 3 has updated operational data to be sent to the tag device 2, the primary downlink packet is preferably an advertising packet using a directed, non-connectable and non-scannable Common Extended Advertising Payload Format, with an auxiliary packet. According to these embodiments, the primary downlink packet is, according to the BLE protocol, an ADV_EXT_IND packet and a subsequent secondary downlink packet is the auxiliary packet of type AUX_ADV_IND (the format of these packets is described, for example, in the Bluetooth Core Specification 5.4, Volume 6, Part B, Sections 2.3.1.6 and 2.3.4).

According to the above, if the gateway 3 does not have updated operational data to be sent in downlink to the tag device 2, the primary downlink packet may be sent by the gateway device 3 to the tag device 2 in response to an uplink packet containing an acknowledgement request identifier having a value equal to 2, i.e. ACK_REQ = 2.

As anticipated above, according to the BLE protocol, the primary downlink packet in this case may be an ADV_EXT_IND packet. This packet contains, in the Extended Header, two fields: a first field "Advertiser Address" - AdvA (6 bytes), containing an identifier of the gateway device 3 (for example, the Bluetooth address of its radio transceiver), and a second field "TargetAddress" - TargetA (6 bytes), containing the address of the destination tag device 2, which, according to the embodiments of the present invention described above, corresponds to the device identifier DEV_ID of the tag device 2.

If the gateway device 3 has updated operational data to be sent in downlink to the tag device 2, the primary downlink packet may be sent by the gateway device 3 to the tag device 2 in response to an uplink packet comprising an acknowledgement request identifier having a value equal to 1 or 2, i.e. ACK_REQ = 1 or ACK_REQ = 2.

As anticipated above, according to the BLE protocol, the primary downlink packet in this case may be an ADV_EXT_IND packet with an auxiliary packet. This packet contains, in the Extended Header, four fields: a first field "Advertiser Address" - AdvA (6 bytes), containing the identifier of the gateway device 3; a second field "TargetAddress" - TargetA (6 bytes), containing the address of the destination tag device 2, which, according to the embodiments described above, corresponds to the device identifier DEV_ID of the tag device 2; a third field "AdvData Info" - ADI (2 bytes), containing packet identifying information; and a fourth field "Auxiliary Packet Pointer" - AuxPtr (3 bytes), containing information on the subsequent auxiliary packet (such as, for example, the transmission time and the channel on which it is transmitted). The subsequent AUX_ADV_IND auxiliary packet contains, in the Extended Header, three fields having values corresponding to those present in the first three fields of the ADV_EXT_IND packet: a first field "Advertiser Address" - AdvA (6 bytes), containing the identifier of the gateway device 3; a second field "TargetAddress" - TargetA (6 bytes), containing the address of the destination tag device 2, which, according to the embodiments described above, corresponds to the device identifier DEV_ID of the tag device 2; and a third field "AdvData Info" - ADI (2 bytes), containing packet identifying information. According to embodiments of the present invention, the AUX_ADV_IND auxiliary packet contains, in the payload, the field "Advertising Data" - AdvD (0-254 bytes), containing the updated operational data to be sent to the tag device 2.

If the amount of updated operational data is such as to generate a payload longer than 254 bytes, provision is made for transmitting the data in fragmented form in one or more secondary downlink packets, i.e. by following the AUX_ADV_IND auxiliary packet with an AUX_CHAIN_IND packet (as described, for example, in the Bluetooth Core Specification 5.4, Volume 6, Part B, Sections 2.3.1.8 and 2.3.4) or with a chain of AUX_CHAIN_IND packets.

The uplink packet of type ADV_NONCONN_IND is transmitted on the primary advertising channels (CH37 = 2402 MHz, CH38 = 2426 MHz, CH39 = 2480 MHz). The primary downlink packet of type ADV_EXT_IND is transmitted on the primary advertising channels (CH37 = 2402 MHz, CH38 = 2426 MHz, CH39 = 2480 MHz). The secondary downlink packets of type AUX_ADV_IND and AUX_CHAIN_IND are transmitted on the secondary advertising channels (CH0, ..., CH36).

In particular, the uplink packet of type ADV_NONCONN_IND may be transmitted:
i) on only one of the primary advertising channels (CH37 = 2402 MHz, CH38 = 2426 MHz, CH39 = 2480 MHz). In this case, the radio transceiver of the gateway device 3 operates in the reception state on the same channel used by the tag devices 2 (CH37, CH38 or CH39) and transmits the primary downlink packet ADV_EXT_IND on the same channel;
ii) on all three primary advertising channels. In this case, the radio transceiver of the gateway device 3 cyclically switches over the three channels CH37, CH38 and CH39 and transmits the primary downlink packet ADV_EXT_IND on the same channel on which it received the uplink packet.

Mode i) advantageously makes it possible to reduce current consumption in the tag device 2, due to transmission on a single channel rather than on three channels, with a consequent increase in battery operating life.

According to the present invention, each gateway device 3 may be configured to disable downlink transmission. In particular, according to embodiments of the present invention, each gateway device 3 may, following a command received from the software module of the central processing device 4, disable downlink transmission according to one of the following criteria:
- downlink transmission may be disabled completely; or
- downlink transmission may be disabled if the received signal strength (RSSI) associated with the uplink packet coming from the tag device 2 is lower than a certain threshold.

These criteria make it possible to manage, dynamically and centrally, possible collision conditions between downlink packets transmitted by different gateways 3. By selectively and temporarily disabling downlink transmission of gateway devices 3, the central processing device may eliminate transient downlink packet collision conditions. At the same time, enabling/disabling downlink transmission based on the RSSI value may be used for proximity notification applications: the gateway device 3 responds to the tag device 2 only when the received power is greater than a certain threshold, i.e. when the tag is approximately within a certain distance from the gateway.

The uplink packet transmission interval T may be fixed or variable as a function of the state of the tag. For example, the period T may be shorter when the tag device 2 is moving or is in an alarm state, and longer when the tag device 2 is stationary. For example, when the tag device 2 is moving, it is necessary to transmit the uplink packet more frequently in order to ensure a more accurate real-time update of the estimated position. In such case, the value of period T is typically between 100 ms and 1 s. Conversely, when the tag device 2 is stationary, the value of period T may be increased, since the position of the tag device 2 does not change. In such case, the value of interval T is typically greater than 1 second. The value of period T may be modified at the tag device 2 by means of, for example, a suitable command coming from a gateway device 3.

The diagram of Figure 4 is an example of operation of the system 1 according to embodiments of the present invention. In particular, the diagram of Figure 4 refers to the case in which transmission of the uplink packet takes place on a single primary advertising channel (for example channel CH37). In this illustrative situation, at time t1 the tag device 2 switches on its radio transceiver and broadcasts a first uplink packet 401. In this illustrative situation, the first uplink packet 401 contains an acknowledgement request identifier having a value equal to 0, i.e. ACK_REQ = 0. In this case, once transmission of the first uplink packet 401 has been completed, the radio transceiver of the tag device 2 is switched off until the next uplink packet transmission.

At time t2, the tag device 2 switches on its radio transceiver and broadcasts a second uplink packet 402. At time t2, the radio transceiver of the tag device 2 is in the transmission state. In this illustrative situation, the second uplink packet 402 contains an acknowledgement request identifier ACK_REQ = 1. Therefore, once transmission of the second uplink packet 402 has been completed, the radio transceiver of the tag device 2 switches to the reception state. If updated operational data to be sent to the tag device 2 are not present in the memory of the gateway device 3 receiving the second uplink packet 402 (or if the gateway device is disabled for downlink transmission), upon expiry of the predefined maximum time for reception of a downlink packet, the radio transceiver of the tag device 2 is switched off until the next uplink packet transmission.

At time t3, the tag device 2 switches on its radio transceiver and broadcasts a third uplink packet 403. At time t3, the radio transceiver of the tag device 2 is in the transmission state. In this illustrative situation, the third uplink packet 403 contains an acknowledgement request identifier ACK_REQ = 1 or ACK_REQ = 2. If ACK_REQ = 1 and updated operational data to be sent to the tag device 2 are present in the memory of the gateway device 3 (not disabled for downlink transmission), the radio transceiver of the gateway device 3 switches to the transmission state and, at time t4, sends a primary downlink packet 404 and one or more secondary downlink packets with the updated operational data to the tag device 2; if ACK_REQ = 2 and the gateway device 3 is not disabled for downlink transmission, the radio transceiver of the gateway device 3 switches to the transmission state and, at time t4, sends a primary downlink packet 404 to the tag device 2, and may also send updated operational data in one or more secondary downlink packets. Upon completion of transmission, the radio transceiver of the gateway device 3 switches back to the reception state. Upon completion of reception of the primary downlink packet 404, the tag device 2 preferably switches off its radio transceiver, and switches it on again to receive any secondary downlink packets and to transmit the subsequent uplink packet.

The gateway device 3 preferably forwards each uplink packet to the central processing device 4 together with the information required for calculating the position of the tag device 2, namely, according to the embodiments described above, the received signal strength (RSSI). Said information is used by the software module of the central processing device 4 to determine the position of the tag device 2, according to known techniques which will not be further described as they are not relevant to the present description.

Following reception of an uplink packet comprising an acknowledgement request identifier ACK_REQ = 1 or ACK_REQ = 2, the gateway device 3, in particular the software module of its microcontroller, preferably scans the operational data contained in its internal memory in order to retrieve any updated operational data to be sent to the tag device 2. According to embodiments of the present invention, the gateway device 3 scans the first list (i.e. the configuration data) and/or the second list (i.e. the command data) contained in the internal memory using the identifiers contained in the uplink packet. In particular, according to embodiments of the present invention, upon reception of each uplink packet comprising an acknowledgement request identifier ACK_REQ = 1 or ACK_REQ = 2, the gateway device scans the first list comprising the configuration data and subsequently the second list comprising the command data. According to some embodiments of the present invention, the subsequent scanning of the second list takes place only if updated configuration data are not present in the first list.

The first list is scanned using the value of the class identifier CLS_ID and the configuration identifier CFG_ID retrieved from the uplink packet. In particular, if, for the device class identified by the value of the class identifier CLS_ID contained in the uplink packet, the value of the configuration identifier CFG_ID contained in the uplink packet is lower than the value of the configuration identifier CFG_ID present in the first list and associated with the considered device class, the gateway device 3 preferably retrieves the operational configuration data present in the first list (such data are referred to as updated configuration data) for transmission to the tag device 2. In this case, the operational configuration present in the first list, being associated with a value of the configuration identifier CFG_ID higher than the value of the configuration identifier CFG_ID contained in the uplink packet, is an updated operational configuration with respect to the last operational configuration received by the tag device 2 and therefore already present on the tag device 2. The gateway device 3 preferably also sends to the tag device 2 the value of the configuration identifier CFG_ID present in the first list and associated with the new operational configuration.

The second list may be scanned using the value of the device identifier DEV_ID and the value of the command identifier CMD_ID retrieved from the uplink packet. In particular, if the value of the command identifier CMD_ID contained in the uplink packet is lower than the value of the command identifier CMD_ID present in the second list and associated with the considered device, the gateway device 3 preferably retrieves the command data present in the second list (such data will be referred to as updated command data) for transmission to the tag device 2. In this case, the command associated with the device identifier DEV_ID contained in the second list is an updated command with respect to the command associated with the command identifier CMD_ID present in the uplink packet, which is the last command received by the tag device 2 (corresponding to the last command sent by a gateway device to the considered tag device) and is therefore already present on the tag device 2. The gateway device 3 preferably also sends to the tag device 2 the value of the command identifier CMD_ID present in the second list and associated with the new command for the considered device.

Alternatively, the second list may be scanned using the value of the class identifier CLS_ID and the value of the command identifier CMD_ID retrieved from the uplink packet. In particular, if the value of the command identifier CMD_ID contained in the uplink packet is lower than the value of the command identifier CMD_ID present in the second list and associated with the class of the device identified by the value of the class identifier CLS_ID contained in the uplink packet, the gateway device 3 preferably retrieves the command data present in the second list for transmission to the tag device 2. In this case, the command present in the second list and associated with the class identifier CLS_ID contained in the uplink packet is an updated command with respect to the last command received by the tag device 2. The gateway device 3 preferably also sends to the tag device 2 the value of the command identifier CMD_ID present in the second list and associated with the considered device class.

When the tag device 2 receives updated configuration data, it writes such data into the non-volatile memory (so that such data can also be retrieved in the event of temporary loss of power supply, for example following battery replacement), and updates its own operational configuration using the updated configuration data received from the gateway device 3. Furthermore, the tag device 2 preferably updates the value of the configuration identifier CFG_ID with the value of the configuration identifier CFG_ID received from the gateway device 3 together with the updated configuration data.

When it receives updated command data, the tag device 2 preferably executes the command associated with such data (for example, a command to blink an LED, or to write a certain text on a display, or to actuate a digital output, or to perform a reading from a data acquisition interface, etc.). Furthermore, the tag device 2 preferably updates the value of the command identifier CMD_ID with the value received from the gateway device 3 together with the updated command data.

Finally, as already described above, the tag device 2 inserts the updated value of the configuration identifier CFG_ID or of the command identifier CMD_ID into the subsequent uplink packet, together, optionally, with the return code associated with the operational configuration just received or with the command just received.

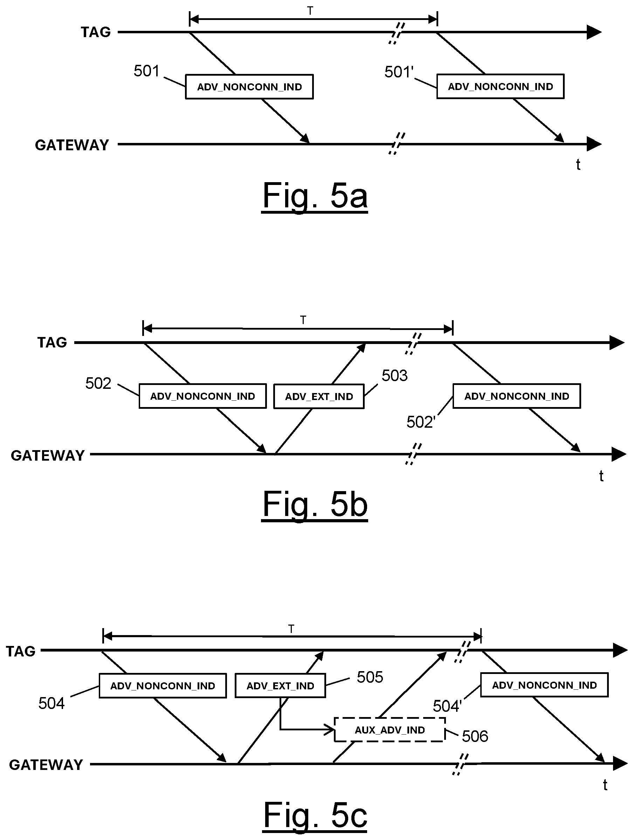

Figures 5a, 5b and 5c schematically show some illustrative situations of exchange of uplink and downlink packets between the tag device 2 and the gateway device 3 according to some embodiments already described above.

In the diagram of Figure 5a, the following sequence of operations is represented:
- the tag device 2 switches on the radio transceiver, transmits an uplink packet 501 of type ADV_NONCONN_IND with ACK_REQ = 0 (without acknowledgement request), and subsequently switches off the radio transceiver until transmission of a subsequent uplink packet 501' (after period T);
- upon receipt of the uplink packet 501, the gateway device 3 retrieves the data contained in the uplink packet and, in particular, the value of the acknowledgement request identifier ACK_REQ;
- since ACK_REQ = 0, the radio transceiver of the gateway device 3 remains in the reception state in order to receive new uplink packets (from the same tag device 2 or from other tag devices).

The same diagram also represents the following sequence of operations:
- the tag device 2 switches on the radio transceiver, transmits an uplink packet 501 of type ADV_NONCONN_IND with ACK_REQ = 1 (with low-priority acknowledgement request), and subsequently switches the state of its radio transceiver from the transmission state to the reception state; the radio transceiver of the tag device 2 remains in the reception state for a predefined maximum time; upon expiry of said predefined maximum time, the tag device 2 switches off the radio transceiver until transmission of a subsequent uplink packet 501';
- upon receipt of the uplink packet 501, the gateway device 3 retrieves the data contained in the first uplink packet and, in particular, the value of the acknowledgement request identifier ACK_REQ; the gateway device 3 further verifies that updated operational data to be sent to the tag device 2 are not present in its memory;
- since ACK_REQ = 1, given that the gateway device 3 has no updated operational data to be sent to the tag device 2, the radio transceiver of the gateway device 3 remains in the reception state in order to receive new uplink packets (from the same tag device 2 or from other tag devices).

Finally, the same diagram also represents the sequence of operations performed when the tag device 2 transmits an uplink packet 501 of type ADV_NONCONN_IND with ACK_REQ = 1 or ACK_REQ = 2 but the gateway device 3 is disabled for transmission (for example, because the received signal strength associated with the uplink packet is below the threshold).

The predefined maximum time during which the radio transceiver of the tag device 2 remains in the reception operating state depends on the duration of the time interval between completion of transmission of the uplink packet 401 and reception of a possible downlink packet. According to embodiments of the present invention, said duration is equal to or less than the so-called Inter Frame Space provided by the BLE protocol, which is equal to 150 µs (this parameter is described, for example, in the Bluetooth Core Specification 5.4, Volume 6, Part B, Section 4.1.1).

In the diagram of Figure 5b, the following sequence of operations is represented:
- the tag device 2 switches on the radio transceiver, transmits an uplink packet 502 of type ADV_NONCONN_IND with ACK_REQ = 2 (with high-priority acknowledgement request), and subsequently switches the state of its radio transceiver from the transmission state to the reception state;
- upon receipt of the uplink packet 502, the gateway device 3 retrieves the data contained in the uplink packet and, in particular, the value of the acknowledgement request identifier ACK_REQ; the gateway device 3 further verifies that updated operational data to be sent to the tag device 2 are not present in its memory;
- since ACK_REQ = 2, the radio transceiver of the gateway device 3 switches to the transmission state in order to transmit the primary downlink packet 503 of type ADV_EXT_IND as an acknowledgement of receipt of the uplink packet 502;
- once transmission of the downlink packet 503 has been completed, the radio transceiver of the gateway device 3 switches to the reception state in order to receive new uplink packets (from the same tag device 2 or from other tag devices);
- the radio transceiver of the tag device 2 remains in the reception state until complete reception of the primary downlink packet 503; subsequently, the tag device 2 switches off the radio transceiver until transmission of a subsequent uplink packet 502'.

In the diagram of Figure 5c, the following sequence of operations is represented:
- the tag device 2 switches on the radio transceiver, transmits an uplink packet 504 of type ADV_NONCONN_IND with ACK_REQ = 1 or ACK_REQ = 2, and subsequently switches the state of its radio transceiver from the transmission state to the reception state;
- upon receipt of the uplink packet 504, the gateway device 3 retrieves the data contained in the first uplink packet and, in particular, the value of the acknowledgement request identifier ACK_REQ; the gateway device 3 further verifies that updated operational data to be sent to the tag device 2 are present in its memory;
- the radio transceiver of the gateway device 3 switches to the transmission state in order to transmit the primary downlink packet 505 of type ADV_EXT_IND as an acknowledgement of receipt of the uplink packet 504 and subsequently sends a secondary downlink packet 506 of type AUX_ADV_IND containing the updated operational data to be sent to the tag device 2;
- once transmission of the secondary downlink packet 506 has been completed, the radio transceiver of the gateway device 3 switches to the reception state in order to receive new uplink packets (from the same tag device 2 or from other tag devices);
- the radio transceiver of the tag device 2 remains in the reception operating state until complete reception of the downlink packet 505; the tag device 2 then switches off the radio transceiver and switches it on again at the time instant and on the channel communicated by the gateway device 3 in the AuxPtr field of the primary downlink packet 505; the radio transceiver remains in the reception operating state until complete reception of the auxiliary downlink packet 506; subsequently, the tag device 2 switches off the radio transceiver until transmission of a subsequent uplink packet 504'.

According to these embodiments, if the amount of updated operational data is such as to generate a payload having a length greater than the 254 bytes available in the AUX_ADV_IND packet, the data may be fragmented by transmitting the AUX_ADV_IND packet followed by one or more AUX_CHAIN_IND packets, according to the procedures defined by the BLE protocol.

The time interval between completion of transmission of the ADV_EXT_IND and transmission of the AUX_ADV_IND packet is greater than or equal to the Minimum AUX Frame Space, equal to 300 µs (as described, for example, in the Bluetooth Core Specification 5.4, Volume 6, Part B, Section 4.1.2).

In conclusion, the embodiments of the present invention described herein provide for transmission in uplink, by the tag device 2, of an undirected, non-connectable and non-scannable BLE advertising packet containing identifying information of the tag device 2, and transmission in downlink, by the gateway device 3, of one or more directed, non-connectable and non-scannable packets addressed to the tag device 2 that sent the uplink packet received by the gateway device 3. In particular, according to some embodiments of the present invention described above, the method for bidirectional communication between tag device 2 and gateway devices 3 in the described system uses, both in uplink and in downlink, advertising packets compliant with the BLE protocol: in uplink, the undirected, non-connectable and non-scannable packet of type ADV_NONCONN_IND is used, whereas in downlink the directed, non-connectable and non-scannable packets ADV_EXT_IND and AUX_ADV_IND are used (and AUX_CHAIN_IND in the case of transmission of fragmented data).

According to other embodiments of the present invention, the gateway device may transmit in downlink one or more directed packets having a format not currently adopted within the BLE protocol (i.e. with a value of the "PDU type" field not assigned in the BLE protocol, or currently defined as "Reserved for future use").

The operational data stored in the gateway devices 3 are updated by the software of the central processing device 4 through write and delete commands sent to the gateway devices 3, for example via MQTT protocol (MQ Telemetry Transport). Commands for updating the operational data may be sent to all gateway devices 3 or to a subset of said devices.

Successful transmission of operational data to a tag device 2 by a gateway device 3 is detected by the central processing device 4 following receipt of a subsequent uplink packet sent by the considered tag device 2, in which the value of one of the configuration identifier CFG_ID and the command identifier CMD_ID is updated. The central processing device, based on the received packets (which contain the updated identifiers), determines whether or not to remove the command or the operational configuration from the corresponding list.

According to embodiments of the present invention, bidirectional communication between tag devices and gateway devices may provide for encryption of the data, according to an encryption algorithm with a key shared among all tag devices and gateway devices belonging to the system.

Advantageously, according to the embodiments described above, the system according to the present invention makes it possible to implement bidirectional communication using standard BLE protocol packet formats. Therefore, advantageously, the present invention ensures a certain level of interoperability with other BLE devices. The uplink packet transmitted by the tag devices can be received by any BLE scanner, being an undirected, non-connectable and non-scannable advertising packet. However, only the gateway devices of the considered localization system, through their internal software, are able to process the uplink packet and manage the acknowledgement mechanism based on the value of the acknowledgement request identifier ACK_REQ. The fact that the uplink packet can be received by any BLE scanner makes it possible, for example, to track the tag device transmitting it even if said device moves outside the coverage region of the gateway devices. For example, the tag devices may be applied to containers used in industrial production to transport semi-finished products within a plant or between different plants. In this case, when the containers are in transit on vehicles, they may be tracked by GPS trackers equipped with a BLE scanner function installed on board the vehicles.

The gateway device operates as a BLE passive scanner, i.e. as a device capable of receiving advertising packets from generic BLE advertiser devices (but not capable of connecting to another device or of sending a SCAN_REQ packet). The gateway device, according to the embodiments described above, may always receive on the same primary advertising channel (CH37, CH38 or CH39), or may perform a scanning cycle on the three primary advertising channels (CH37, CH38 and CH39). However, even in the case of reception on a single channel, no packets are lost if the generic BLE advertiser devices transmit on all three channels. This makes it possible to receive data also from other BLE advertiser devices, such as sensors whose data may be integrated into the localization system. For example, it is possible to associate a door opening event (detected by a BLE magnetic sensor) with the position of the tag device estimated by the system, in order to identify entry of a person into a room in a certain and reliable manner.

Updated operational data for the tags may be transmitted in downlink on one of the 37 secondary advertising channels, which makes it possible to optimize use of the bandwidth of the primary advertising channels. The AUX_ADV_IND packet may comprise up to 254 bytes and therefore makes it possible to send a significant amount of data in downlink with a single packet (for example, it makes it possible to send even long text sequences for electronic labels). In the case of a larger amount of data, the data may be fragmented and transmitted in a chain of multiple packets.

Advantageously, the present invention makes it possible to implement bidirectional communication between tags and gateways efficiently, in particular while ensuring low power consumption by the tag devices, which are provided with a primary, non-rechargeable battery. Ensuring low power consumption means extending battery life and minimizing maintenance costs. According to the present invention, reduction of power consumption is ensured by the fact that the residence times of the tag device in the reception state are reduced, since the response latency of a gateway device is minimal. Indeed, downlink transmission according to the present invention provides for retrieving the data to be sent to the tags through the use of one or more data lists stored in the gateway devices and therefore making it possible to minimize the response time of the device.

Some typical use cases in which bidirectional communication implemented in a local positioning system according to the present invention may be advantageous are described below, purely by way of illustration and without limitation, with reference to application fields relating to safety, personal assistance and intralogistics:
- a person equipped with a wearable tag presses an alarm call button following an emergency event. The tag broadcasts a packet with a high-priority acknowledgement request (ACK_REQ = 2). The packet is received by one or more gateways and forwarded to the central processing device. The localization software estimates the position of the user, thereby generating a localized alarm indication. At the same time, the tag receives the acknowledgement from a gateway, following which it interrupts alarm transmission and may notify the user (for example by vibration or acoustic signalling) that the alarm signal has been correctly delivered to a gateway. Alternatively, following receipt of the packet from the tag, the central software may send to the gateways a command for the tag containing parameters for activating a signalling function. Said command will be forwarded to the tag upon a subsequent transmission with acknowledgement request (ACK_REQ = 1 or ACK_REQ = 2), thereby notifying the user that the alarm has been received by the system.
- an isolated worker equipped with a wearable tag enters a restricted-access area in which entry is allowed only in the presence of authorized personnel. The tag is configured to periodically transmit packets with acknowledgement request (ACK_REQ = 1 or ACK_REQ = 2), which are received by gateways arranged inside the area and sent to the central processing device. The localization software calculates the position of the tag, following which an alarm condition associated with the unauthorized presence is generated. A command is sent to the gateways arranged inside the area in order to activate a signalling function on board the tag. The tag receives the signalling activation command (for example, vibration with light signalling) which notifies the worker of the alarm condition associated with his unauthorized presence.
- a company uses a safety system allowing localization of personnel, who are provided with wearable tags equipped with a button, a visual indicator (display or LED) and/or an acoustic indicator and/or vibration and/or another type of interface. The system allows localization of personnel within the company perimeter by means of a gateway infrastructure. In the presence of emergency situations, the system sends to all tags, via the gateways, a notification through a signalling activation command, in order to verify the state of consciousness of each worker. When the signalling is received, each worker presses the button to notify the system that he or she is in good health. In this way, the company has real-time control of the health status of all workers.
- a manufacturing company uses bins for storing semi-finished products during different phases of the production cycle. Said bins are deposited in various areas of the plant pending the next processing phase. Localization and identification of the bins is an activity causing considerable time losses. The company adopts a localization system by means of gateways and tags applied to the bins and provided with LEDs. When an operator has to collect a bin, the operator identifies, through the localization system, the area in which the bin is located. The localization software makes it possible to send to the tag a command causing the LED to blink, so that the operator can identify it safely and quickly, limiting the search area to the area identified by the localization system.

## Claims

1. A wireless communication system (1) for a local positioning system, the wireless communication system comprising a first device (2) and a second device (3) configured to communicate according to the Bluetooth Low Energy protocol, wherein said first device (2) is configured to transmit a first packet (401, 402, 403, 501, 502, 504) formatted as an undirected, non-connectable and non-scannable advertising packet according to the Bluetooth Low Energy protocol, said first packet (401, 402, 403, 501, 502, 504) including an acknowledgement request identifier settable to a value indicating that said first device requires an acknowledgement of receipt of said first packet (401, 402, 403, 501, 502, 504) by said second device (3),
and wherein said second device (3) is configured to:
- receive said first packet (401, 402, 403, 501, 502, 504) and retrieve a value of said acknowledgement request identifier contained in said first packet (401, 402, 403, 501, 502, 504); and
- based on the value of said acknowledgement request identifier contained in the first packet (401, 402, 403, 501, 502, 504), determine that said first device (2) requires said acknowledgement of receipt of said first packet (401, 402, 403, 501, 502, 504), and transmit to said first device (2) a second packet (404, 503, 505) formatted as a directed, non-connectable and non-scannable advertising packet according to the Bluetooth Low Energy protocol.

2. The wireless communication system according to claim 1, wherein said second device (3) is further configured to store a set of operational data for said first device (2), said operational data including an operational configuration and/or a command for said first device (2), said first device (2) is further configured to insert identifying information of said first device (2) into said first packet (401, 402, 403, 501, 502, 504), said identifying information of said first device (2) being associated with current operational data of said first device (2), and said second device (3) is further configured to use said identifying information of said first device (2) to verify if said second device (3) comprises updated operational data with respect to said current operational data of said first device (2).

3. The wireless communication system (1) according to claim 2, wherein said second device (3) is further configured to, in the event that said updated operational data for said first device (2) are present, send said updated operational data to said first device (2).

4. The wireless communication system (1) according to any of claims 2 or 3, wherein said identifying information of said first device (2) comprises an operational configuration identifier and a command identifier, said operational configuration identifier being indicative of a current operational configuration of said first device (2) and said command identifier being indicative of a command received at said first device (2) whose execution may or may not have been completed by said first device.

5. The wireless communication system (1) according to any of claims 2 to 4, wherein said acknowledgement request identifier is settable to a first value indicating that said first device (2) does not require said acknowledgement of receipt of said first packet (401, 402, 403, 501, 502, 504), or a second value indicating that the first device (2) requires said acknowledgement of receipt of the first packet (401, 402, 403, 501, 502, 504) only if said updated operational data for the first device (2) are present at the second device (3), or a third value indicating that the first device (2) requires said acknowledgement of receipt of the first packet (401, 402, 403, 501, 502, 504) even if said updated operational data are not present at the second device (3).

6. The wireless communication system (1) according to claim 1, wherein said first device (2) comprises a radio transceiver (202) configured to:
- operate in a transmission state to transmit said first packet (401, 402, 403, 501, 502, 504); and
- switch from said transmission state to a reception state in case said first device (2) requires said acknowledgement of receipt of the first packet (401, 402, 403, 501, 502, 504) by said second device (3) and remain in said reception state until completion of reception of said second packet (404, 503, 505) or for a predefined maximum time;
and said first device (2) is configured to:
- switch off said radio transceiver (202) upon completion of transmission of the first packet (401, 402, 403, 501, 502, 504) in case said first device (2) does not require said acknowledgement of receipt of the first packet (401, 402, 403, 501, 502, 504) by said second device (3);
- switch off said radio transceiver (202) upon completion of reception of the second packet (404, 503, 505) or upon expiration of the predefined maximum time in case said first device (2) requires said acknowledgement of receipt of the first packet (401, 402, 403, 501, 502, 504) by said second device (3).

7. The wireless communication system (1) according to any of the preceding claims, wherein the second device (3) is further configured to disable the transmission of said second packet (404, 503, 505) in the event that a received signal strength associated with said first packet (401, 402, 403, 501, 502, 504) is lower than a predefined threshold.

8. The wireless communication system (1) according to any of the preceding claims, wherein said first packet (401, 402, 403, 501, 502, 504) is a packet of the ADV_NONCONN_IND type according to the Bluetooth Low Energy protocol, and wherein said second packet (404, 503, 505) is a packet of the ADV_EXT_IND type according to the Bluetooth Low Energy protocol.

9. The wireless communication system (1) according to claim 8 when dependent on claim 3, wherein said second packet (404, 503, 505) is a packet of the ADV_EXT_IND type with an auxiliary packet according to the Bluetooth Low Energy protocol, and said updated operational data are sent to said first device (2) in a packet of the AUX_ADV_IND type according to the Bluetooth Low Energy protocol.

10. A local positioning system comprising the wireless communication system (1) according to any of the preceding claims.
